(19) **Europäisches Patentamt / European Patent Office / Office européen des brevets**

(11) **EP 4 617 311 A1**

(12) # EUROPEAN PATENT APPLICATION

(43) Date of publication:
**17.09.2025 Bulletin 2025/38**

(21) Application number: **24163076.3**

(22) Date of filing: **12.03.2024**

(51) International Patent Classification (IPC):
**C08L 23/04** (2006.01)

(52) Cooperative Patent Classification (CPC):
(C-Sets available)
**C08L 23/04;** C08L 2205/025; C08L 2205/03;
C08L 2207/062                                            (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Basell Polyolefine GmbH
50389 Wesseling (DE)**

(72) Inventors:
- **PERDOMI, Gianni
  44122 Ferrara (IT)**
- **BASSI, Paolo
  44122 Ferrara (IT)**
- **FERRARI, Davide
  44122 Ferrara (IT)**

(74) Representative: **LyondellBasell
c/o Basell Poliolefine Italia
Intellectual Property
P.le Donegani 12
44122 Ferrara (IT)**

(54) **POLYMER BLEND FOR THE PRODUCTION OF A MONO-AXIALLY ORIENTED FILM**

(57)     The present disclosure relates to a polymer blend (I) comprising:

A) a first polyethylene component in a wt.% A amount from 5 to 95 wt.%, having a density $D^A$ from 0.926 to 0.945 g/cm$^3$, a Melt Index MIE from 0.1 to 3 g/10 min and Mw/Mn of 7 or greater;

B) a second polyethylene component in a wt.% B amount from 5 to 95 wt.%, having a density $D^B$ from 0.949 to 0.965 g/cm$^3$ and a Melt Index MIF from 5 to 28 g/10 min.;
wherein the wt.% A of the first polyethylene component A) and the wt.% B of second polyethylene component B) are with respect to the overall weight of A) + B).

EP 4 617 311 A1

(52) Cooperative Patent Classification (CPC): (Cont.)

C-Sets
**C08L 23/04, C08L 23/04**

# EP 4 617 311 A1

**Description**

FIELD OF THE INVENTION

The present disclosure relates to a polymer blend, a mono-axially oriented polymer film comprising said blend, and a method of production of the mono-axially oriented polymer film.

BACKGROUND OF THE INVENTION

Polymeric films are widely used, both in industrial manufacturing processes and in the nonindustrial sector for the wholesale and retail delivery of goods to the consumer market.

Currently, films composed of ethylene based thermoplastic polymers dominate certain of these market applications, such as the market for household disposables, trash bags and liners; overwrap films and bags for laundry and dry cleaning goods; and shipping and carryout bags for retail merchandising of non-perishable goods. In other aspects of the consumer goods delivery market, ethylene based polymer films only weakly compete, if at all, with other more expensive polymer films such as plasticized polyvinyl chloride films and/or polypropylene films, such as in the heat-shrink wrap film market for the taut-contour fit wrapping of various items, particularly perishables such as cuts of meat, poultry, and fish. Yet for other applications, such as for packaging of produce, package constructions for cereals, dry foods, and snack foods ethylene based polymer films compete somewhat in certain circumstances of these applications.

Due to their valuable mechanical and optical properties, oriented polymeric films are increasingly requested for packaging applications.

Examples of oriented polyethylene films are disclosed in WO9722470, WO9821276 and CN113969007A.

However, to achieve an optimal profile of properties, oriented polymeric films, including the mono-axially oriented films, generally have a multiple layer structure, with layers of different polymeric materials, like for instance polypropylene, polyethylene, polyethylene terephthalate, polyamides, ethylene polyvinyl alcohol.

Such complex structures require complex processing in the film preparation and are hardly compliant with the present sustainability and recyclability requirements.

An attractive candidate for the preparation of mono-axially oriented films with reduced complexity, in terms of composition and structure, is polyethylene, in particular the high density polyethylene (HDPE).

In fact, HDPE can potentially achieve high mechanical properties, as it can be oriented up to relatively high stretch ratios.

Moreover, HDPE can achieve valuable optical properties, when properly treated.

However, the use of HDPE in the preparation of oriented films has been strongly limited by processing difficulties, resulting into often insufficient final properties.

The object of the present disclosure is to provide a polymer blend, a use thereof, a method of production of a mono-axially oriented polymer film and a mono-axially oriented polymer film that allow the drawbacks of the known art to be at least partially overcome, and which are, at the same time, simple and inexpensive to implement.

SUMMARY OF THE INVENTION

Thus the present disclosure provides a polymer blend (I) comprising:

A) a first polyethylene component in a wt.% A amount from 5 to 95 wt.%, preferably from 10 to 90 wt.%, more preferably from 15 to 85 wt.%, said first polyethylene component having a density $D^A$ from 0.926 to 0.945 g/cm$^3$, preferably from 0.928 to 0.945 g/cm$^3$, a Melt Index MIE from 0.1 to 3 g/10 min and Mw/Mn of 7 or greater, preferably of 8 or greater; and
B) a second polyethylene component in a wt.% B amount from 5 to 95 wt.%, preferably from 10 to 90 wt.%, more preferably from 15 to 85 wt.%, said second polyethylene component having a density $D^B$ from 0.949 to 0.965 g/cm$^3$, preferably from 0.952 to 0.965 g/cm$^3$, more preferably from 0.949 to 0.958 g/cm$^3$ or from 0.952 to 0.958 g/cm$^3$, and a Melt Index MIF from 5 to 28 g/10 min., preferably from 5 to 24 g/10 min.;

wherein the wt.% A of the first polyethylene component A) and the wt.% B of second polyethylene component B) are with respect to the overall weight of A) + B).

The mono-axially oriented polyethylene films obtained from said polymer blend have surprisingly good optical (in particular, haze and gloss) and mechanical (in particular, tensile) properties.

DETAILED DESCRIPTION OF THE INVENTION

Preferably the value of the relation:

$$\text{wt.\% A*D}^A + \text{wt.\% B*D}^B$$

is equal to or higher than 93, preferably equal to or higher than 93.5, the preferred upper limit being of 96 or 95.5 in all cases.

In the present text: MIF indicates the Melt Index measured with 21.6 kg at 190°C; MIP indicates the Melt Index measured with 5 kg at 190°C; and MIE indicates the Melt Index with 2.16 kg at 190°C.

The first polyethylene component A) and the second polyethylene component B) can be selected from ethylene homopolymers and ethylene copolymers containing alpha-olefin monomer units (preferably in amounts up to 10% by weight) and their mixtures. Examples of the said alpha-olefin monomer units are those having from 3 to 8 carbon atoms, in particular propylene, 1-butene, 1-pentene, 1-hexene, 1-octene and 4-methyl-1-pentene. 1-butene and 1-hexene are preferred.

Said homopolymers and copolymers can be obtained by way of polymerization processes in the presence of coordination catalysts. Said processes and the homopolymers and copolymers obtained from them are widely described in the art.

In particular it is possible to carry out the polymerization process in the presence of a Ziegler-Natta catalyst or single site catalyst.

As is well known, a Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Particularly preferred catalysts comprise the product of the reaction of said organometallic compound of group 1, 2 or 13 of the Periodic Table of elements, with a solid catalyst component comprising a Ti compound supported on $MgCl_2$.

Preferred organometallic compounds are the organo-Al compounds.

The single site catalysts are known in the art and are generally selected from metallocene and non-metallocene single site catalysts.

Examples of metallocene single site catalysts are zirconocenes and hafnocenes, for instance cyclopentadienyl or indenyl complexes of zirconium or hafnium, like bis (cyclopentadienyl) zirconium dichloride; bis (indenyl) zirconium dichloride or bis (indenyl) hafnium dichloride.

Examples of non-metallocene single site catalysts are iron complex compounds preferably having a tridentate ligand.

Particularly suited tridentate ligands are 2,6-Bis[1-(phenylimino)ethyl] pyridine and preferably the corresponding compounds wherein both the two phenyl groups are substituted in the ortho-position with a halogen or tert. alkyl substituent.

Specific examples are 2,6-Bis[1-(2-tert.butylphenylimino)ethyl]pyridine iron(II) dichloride; 2,6-Bis[1-(2-tert.butyl-6-chlorophenylimino)ethyl]pyridine iron(II) dichloride or 2,6-Bis[1-(2,4-dichlorophenylimino)ethyl]pyridine iron(II) dichloride.

Said metallocene and non-metallocene single site catalysts can also be used in combination.

Preferably, the single site catalysts are reacted with activating compounds (cocatalysts), preferred examples of which are aluminoxanes, such as mono-methylaluminoxane (MAO), for instance.

The polymerization, which can be continuous or batch, is carried out, in the presence of said catalysts, following known techniques and operating in liquid phase, in the presence or not of inert diluent, or in gas phase, or by mixed liquid-gas techniques.

Reaction time, pressure and temperature relative to the polymerization steps are not critical, however it is best if the temperature is from 50 to 100°C. The pressure can be atmospheric or higher.

The regulation of the molecular weight is carried out by using known regulators, hydrogen in particular.

In addition to the said components A) and B), the present polymer blend (I) can also comprise a further (third) polyethylene component C) comprising one or more ethylene polymers having a density of lower than 0.926 g/cm³, in particular equal to or lower than 0.925 g/cm³, more preferably equal to or lower than 0.924 g/cm³, the preferred lower limit being of 0.910 g/cm³ in all cases.

Preferred amounts of component C) are from 2 to 30 wt.%, more preferably from 5 to 25 wt.%, referred to the total weight of A) + B) + C).

Said ethylene polymers present in polyethylene component C) are preferably selected from LLDPE (linear low density polyethylene), LDPE (low density polyethylene) and their mixtures.

Preferably both the said LLDPE and LDPE have a Melt Index MIE from 0.1 to 3 g/10 min.

Both LLDPE and LDPE are selected from ethylene homopolymers and copolymers.

Examples of LLDPE copolymers include copolymers containing the same alpha-olefin monomer units, in particular containing from 3 to 8 carbon atoms, as previously described.

Both LLDPE homopolymers and copolymers can be obtained by way of the same coordination catalysts and polymerization processes as previously described for the preparation of polyethylene components A) and B).

Examples of LDPE copolymers include ethylene-vinyl acetate copolymers, ethylene-vinyl alcohol copolymers, ethylene-acrylate copolymers, ethylene-methacrylate copolymers, ethylene copolymers containing alpha-olefin monomer units and mixtures thereof.

Suitable examples of alpha-olefin monomer units in the LDPE copolymers are the same as previously described.

There are two basic high pressure polymerization processes for the manufacture of LDPE: autoclave and tubular.

The LDPE made by the autoclave reactor process has a high concentration of long chain branches, resulting into high values of elongational hardening, and a relatively broad molecular weight distribution that make it easy to process.

The autoclave polymerization is generally carried out in the presence of radical initiating agents selected from organic peroxides.

The tubular reactor process does not necessarily require the use of organic peroxides. It can be carried out by using oxygen alone as the radical initiating agent, thus allowing to prepare a LDPE which is free from the products of chemical degradation of organic peroxides.

The said LDPE can also be prepared with a mixed process combining both autoclave and tubular reactors.

Process operating conditions can include, but are not limited to, a pressure in the range of from 70 MPa to 700 MPa and a temperature in the range of from 150°C to 500°C.

The polymerization can be carried out in the presence of one or more chain transfer agents known in the art, such as propylene, propane and propionic aldehyde.

Such chain transfer agents are used to regulate the molecular weights.

The said processes and the resulting LDPE product are well known in the art. For instance, US patent. No. 3,691,145 and US patent application No. 2010/0076160 teach producing LDPE in a tubular reactor process.

In general, the term "copolymer" is meant to include also polymers containing more than one kind of comonomers, such as terpolymers.

All the said ethylene homopolymers and copolymers are available on the market. Specific commercial polymers suited for producing the present polymer blend (I) are described in the examples.

Advantageously but not necessarily, the first polyethylene component has tensile modulus up to 1000 MPa (in particular, up to 800 MPa).

According to some non-limiting embodiments, the first polyethylene component has tensile modulus of at least 100 MPa (in particular, at least 200 MPa; more in particular, at least 250 MPa).

Advantageously but not necessarily, the first polyethylene component has a Mw equal to or lower than 250000 g/mol (in particular, lower than 200000 g/mol).

In some non-limiting cases, the first polyethylene component has a Mw equal to or higher than 90000 g/mol (in particular, equal to or higher than 100000 g/mol).

Advantageously but not necessarily, the first polyethylene component has a Mw/Mn equal to or lower than 25.0 (in particular, equal to or lower than 20.0).

According to some non-limiting embodiments, the first polyethylene component has a number-average molar mass Mn equal to or higher than 9000 g/mol; in particular, equal to or lower than 20000 g/mol (more in particular, equal to or lower than 17000 g/mol).

According to some non-limiting embodiments, the first polyethylene component has z-average molecular weight Mz equal to or lower than 800000 g/mol (in particular, equal to or lower than 750000 g/mol); in particular, equal to or higher than 200000 g/mol (more in particular, equal to or higher than 250000 g/mol).

Alternatively or additionally, the said first polyethylene component has MIF from 10 to 40 g/min.

Advantageously but not necessarily, the second polyethylene component has tensile modulus on compression molded plaque up to 2000 MPa (more particularly, up to 1800 MPa).

According to some non-limiting embodiments, the second polyethylene component has tensile modulus on compression molded plaque of at least 500 MPa (in particular, at least 600 MPa; more in particular, at least 800 MPa).

Advantageously but not necessarily, the second polyethylene component has a weight average molecular weight Mw equal to or lower than 250000 g/mol (in particular, lower than 200000 g/mol).

In some non-limiting cases, the second polyethylene component has a Mw equal to or higher than 90000 g/mol (in particular, equal to or higher than 100000 g/mol).

According to particularly preferred but not limiting embodiments, the second polyethylene component has a Mw/Mn equal to or lower than 20 (in particular, equal to or lower than 18).

In some non-limiting cases, the second polyethylene component has a Mw/Mn equal to or higher than 6.0 (in particular, equal to or higher than 7.0).

According to some non-limiting embodiments, the second polyethylene component has a number-average molar mass Mn equal to or higher than 9000 g/mol; in particular, equal to or lower than 20000 g/mol (more in particular, equal to or lower than 17000 g/mol).

According to some non-limiting embodiments, the second polyethylene component has z-average molecular weight Mz equal to or lower than 800000 g/mol (in particular, equal to or lower than 750000 g/mol); in particular, equal to or higher than 200000 g/mol (more in particular, equal to or higher than 250000 g/mol, or equal to or higher than 330000 g/mol).

In all cases, Mw, Mn and Mz are measured with gel permeation chromatography (GPC).

Alternatively or additionally, the said second polyethylene component has MIE from 0.1 to 3 g/min., preferably from 0.1 to 2 g/10min., in particular from 0.1 to 1.8 g/10min., or from 0.1 to 1.3 g/10min., or from 0.5 to 3 g/10min., or from 0.5 to 2 g/10min., or from 0.5 to 1.8 g/10min., or from 0.5 to 1.3 g/10min.

Advantageously but not necessarily, the second polyethylene component has a MIF/MIP from 5 to 14, more preferably from 5 to 12.

The present polymer blend (I) can also contain conventional additives.

Examples of these additives are heat stabilizers, antioxidants, UV absorbers, light stabilizers, metal deactivators, compounds which destroy peroxide, and basic costabilizers, typically in amounts of from 0.01 to 10 % by weight, preferably from 0.1 to 5 % by weight, with respect to the total weight of the polymer blend (I).

The present polymer blend (I) can be prepared by a process comprising a combination step, during which the first polyethylene component and the second polyethylene component are combined by melting and mixing the components, and the mixing is effected in a mixing apparatus at temperatures generally of from 160 to 250°C.

Any known apparatus and technology can be used for this purpose.

Useful melt-mixing apparatus in this context are in particular extruders or kneaders, and particular preference is given to twin-screw extruders. It is also possible to premix the components at room temperature in a mixing apparatus.

The present mono-axially oriented polyethylene film can be monolayer or multilayer, wherein at least one layer comprises the present polymer blend (I).

The polymer blend (I) may be present in the mono-axially oriented polyethylene film in a weight amount of at least 40%, preferably of at least 60% in particular from 40 to 100% or from 60 to 100%.

The said amounts are with respect to the total weight of the film when it is a monolayer film, or with respect to the total weight of the layer or layers containing the polymer blend (I) for multilayer films.

As it is mono-axially oriented, the present film is stretched in one direction (only).

Preferably it is a machine direction oriented (MDO) film, hence it is stretched in the machine direction.

For "machine direction" it is meant the direction into which the film is extruded.

In particular, the present mono-axially oriented polyethylene film is stretched with a preferred stretch ratio from 3: 1 to 9: 1.

Preferably, the mono-axially oriented polyethylene film has a thickness equal to or smaller than 250 $\mu$m (in particular, equal to or smaller than 210 $\mu$m).

A preferred lower limit is of 10 $\mu$m in all cases.

In another embodiment, it is herein provided a method of production of the present mono-axially oriented polyethylene film.

More precisely but not necessarily, the mono or multilayer mono-axially oriented polyethylene film can be prepared with known processes.

Said processes comprise a stretching step carried out on a primary film comprising the present polymer blend (I).

In some non-limiting cases, the primary film before stretching has a thickness of at least 0.3 mm (in particular, at least 0.5 mm).

In general the primary film is conveyed through a series of rollers having different rotation speeds.

In particular the mono-axially oriented polyethylene film can be prepared using the flat die extrusion and cooling on chill rolls, or via annular die extrusion and air cooling of the blown film obtained. The so obtained primary film is then passed through a stretching unit by rollers moving faster than the rate at which the polymer is extruded. This orients the film in the machine direction (MD).

The film extrusion is carried out with known techniques, preferably operating at temperatures from 180 to 300°C.

In the orientation stage, carried out in the stretching unit, the main operative conditions are, preferably:

- Pre-heating temperature: 120 - 130°C;
- Pre-heating time: 60 - 100 sec.;
- Stretching speed: 15 - 40 mm/sec.;
- Stretching rate: 30 - 50%/sec.;
- Stretch ratio: 3:1 - 9:1.

After stretching, the film is heat-set to hold the orientation and then reeled up.

In all the said processes, heating can be carried out by using, for instance, IR lamps or hot air or other heating elements, like electrical resistance heaters.

The orientation provides balanced mechanical characteristics. Film orientation greatly improves film's tensile strength, flexibility, and toughness. Orientation also enables the films to be used for heat-shrinking applications.

Preferably, the present mono-axially oriented polyethylene film has one or more of the following properties:

- Haze from 1.5 to 10%, more preferably from 1.5 to 8%;
- Gloss on film (at 45°C): from 50 to 100 GU, preferably from 60 to 95 GU;
- Tensile Modulus MD: from 500 to 2500 MPa.

EXAMPLES

The practice and advantages of the various embodiments, compositions and methods as provided herein are disclosed below in the following examples. These examples are illustrative only, and are not intended to limit the scope of the appended claims in any manner whatsoever.

The following analytical methods are used to characterize the polymer compositions.

Melt flow index

Determined according to to ISO 1133-1 2012-03 at 190°C with the specified load.

Density

Determined according to ISO 1183-1:2012 at 23°C, immersion method.

Tensile modulus

Determined according to ISO 527-2:2012 on compression molded plaques and ASTM D882- 18 on films.

Gloss

Determined according to ASTM D-2457-13.

Haze

Determined according to ASTM D-1003-13.

Molecular Weight Distribution Determination

The determination of the means Mw, Mn and Mz and of Mw/Mn derived therefrom was carried out by high-temperature gel permeation chromatography using a method described in ISO 16014-1, -2, -4, issue of 2003. The specifics according to the mentioned ISO standards are as follows: Solvent 1,2,4-trichlorobenzene (TCB), temperature of apparatus and solutions 145°C and as concentration detector a PolymerChar (Valencia, Paterna 46980, Spain) IR-4 infrared detector, capable for use with TCB. A WATERS Alliance 2000 equipped with the following pre-column SHODEX UT-G and separation columns SHODEX UT 806 M (3x) and SHODEX UT 807 (Showa Denko Europe GmbH, Konrad-Zuse-Platz 4, 81829 Muenchen, Germany) connected in series was used.

The solvent was vacuum distilled under Nitrogen and was stabilized with 0.025% by weight of 2,6-di-tert-butyl-4-methylphenol. The flowrate used was 1 ml/min, the injection was 500$\mu$l and polymer concentration was in the range of 0.01% < conc. < 0.05% w/w. The molecular weight calibration was established by using monodisperse polystyrene (PS) standards from Polymer Laboratories (now Agilent Technologies, Herrenberger Str. 130, 71034 Boeblingen, Germany) in the range from 580g/mol up to 11600000g/mol and additionally with Hexadecane.

The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: $k_{PS}$= 0.000121 dl/g, $\alpha_{PS}$=0.706 and for PE $k_{PE}$= 0.000406 dl/g, $\alpha_{PE}$=0.725, valid in TCB at 135°C. Data recording, calibration and calculation was carried out using NTGPC_Control_V6.02.03 and NTGPC_V6.4.24 (hs GmbH, Hauptstraße 36, D-55437 Ober-Hilbersheim, Germany) respectively.

Comonomer content

The comonomer content was determined by means of IR in accordance with ASTM D 6248 98, using an FT-IR spectrometer Tensor 27 from Bruker, calibrated with a chemometric model, for instance for determining ethyl- side-chains in PE for butene-1 as comonomer and butylside-chains in PE for hexene-1 as comonomer.

Examples 1-3 and Comparative Examples 1-3

These examples disclose the production of samples of MDO polyethylene films and the characteristics of the obtained films.

The following commercially available starting materials, sold by LyondellBasell Industries, have been used.

Component A): Luflexen hyPE 35P FA (hyPE35), having the following features:

- MIE: 0.72 g/10 min;
- MIP: 2.17 g/10 min;
- MIF: 31.34 g/10 min;
- Density: 0.936 g/cm$^3$;
- Tensile modulus: 600 MPa;
- Tensile Stress at Yield: 16 MPa.

Component B): Luflexen hyPE 56P FA (hyPE56), having the following features:

- MIE: 0.77 g/10 min;
- MIF: 18.8 g/10min.;
- MIP: 2.18 g/10 min.;
- MIF/MIP: 8.6;
- Density: 0.955 g/cm$^3$;
- Tensile modulus: 1220 MPa on compression molded plaque;

Component C): mixture of 17 wt.% of Petrothene GA1810 and 3 wt.% Lupolen 2420F, referred to the total weight of A) + B) + C), wherein:

Petrothene GA1810 (GA1810) is a LLDPE having the following features:

- MIE: 1.0 g/10 min;
- Density: 0.918 g/cm$^3$.

Lupolen 2420F (2420 F) is a LDPE having the following features:

- MIE: 0.75 g/10 min;
- Density: 0.923 g/cm$^3$.

The molecular weights of A) and B) are reported in Table 1 below.

Table 1

|  | hyPE 35PFA | hyPE 56PFA |
|---|---|---|
| Mw [g/mol] | 155288 | 147021 |
| Mn [g/mol] | 11161 | 11807 |
| Mw/Mn | 13.91 | 12.45 |
| Mz [g/mol] | 519473 | 496325 |

Samples of MDO polyethylene films with the following polymer blends (I) have been produced (the percentages are by weight with respect overall weight of the polymer blend).

- Example 1: 20% hyPE35 + 60% hyPE56 + 17% GA1810 + 3% 2420 F;
- Example 2: 40% hyPE35 + 40% hyPE56 + 17% GA1810 + 3% 2420 F;
- Example 3: 60% hyPE35 + 20% hyPE56 + 17% GA1810 + 3% 2420 F;
- Comparative Example 1: 80% hyPE35 + 17% GA1810 + 3% 2420 F;
- Comparative Example 2: 80% hyPE56 + 17% GA1810 + 3% 2420 F.

In order to obtain the MDO films the following procedure has been used.

A primary film having a thickness of 1 mm was prepared using a Leonard line with the following features and under the following conditions:

- Extruder diameter: 40 mm, LID 27;
- Dosing gear pump;
- Flat die, with lip width 200 mm, die lip gap of 1 mm;
- Melt temperature: 240°C;
- 3 chill rolls having a diameter of 160 mm, with roll temperature of 45°C;
- Film cutting unit.

From the primary film, 93 x 93 mm specimens were cut. The specimens were then oriented in the machine direction (MD) using a Brueckner KARO IV stretching unit, under the following conditions:

- Pre-heating temperature: 122°C;
- Heating time: 80 sec;
- Stretching speed: 28 mm/sec;
- Stretching rate: 40%/sec.;
- Stretching area: 70 x 70 mm (out of clamps);
- Stretch ratio: see Table 2.

The Brueckner KARO IV stretching unit was used to reproduce the mono-axial stretching step, which on industrial scale is generally carried out by conveying the film through rollers.

The MDO polyethylene films produced had the characteristics indicated in Table 2 below.

Table 2

| Example | | 1 | 2 | 3 |
|---|---|---|---|---|
| Amount of A)* [wt.%] | | 25 | 50 | 75 |
| Amount of B)* [wt.%] | | 75 | 50 | 25 |
| wt.% A*DA + wt.% B*DB | | 95 | 94.6 | 94.1 |
| | | | | |
| Stretch ratio | | 7 | 7 | 7 |
| Thickness | $\mu$m | 139** | 139** | 139** |
| Haze on film | % | 2.8 | 3.2 | 4.5 |
| Gloss on film (at 45°C) | GU | 88.2 | 88.7 | 75.6 |
| Tensile Modulus MD | N/mm$^2$ | 1625 | 1229 | 768 |
| | | | | |
| Stretch ratio | | 8 | 8 | 8 |
| Thickness | $\mu$m | 132*** | 132*** | 132*** |
| Haze on film | % | 3 | 3.9 | 3.3 |
| Gloss on film (at 45°C) | GU | 87.7 | 82 | 82.1 |
| Tensile Modulus MD | N/mm$^2$ | 1544 | 1231 | 840 |

Table 2 cont.

| Example | | Comp. 1 | Comp. 2 |
|---|---|---|---|
| Amount of A)* [wt.%] | | 0 | 100 |
| Amount of B)* [wt.%] | | 100 | 0 |
| | | | |

(continued)

| | | 7 | 7 |
|---|---|---|---|
| Stretch ratio | | 7 | 7 |
| Thickness | | | 139** |
| Haze on film | % | Breaks | 5.9 |
| Gloss on film (at 45°C) | GU | Breaks | 81.4 |
| Tensile Modulus MD | N/mm$^2$ | Breaks | 752 |
| | | | |
| Stretch ratio | | 8 | 8 |
| Thickness | | | 132*** |
| Haze on film | % | Breaks | 5.9 |
| Gloss on film (at 45°C) | GU | Breaks | 77.8 |
| Tensile Modulus MD | N/mm$^2$ | Breaks | 751 |
| * with respect to the total weight of A) + B); ** ±15 μm; *** ±12 μm | | | |

As previously explained, MD means in the "machine direction". In other words, it means that the measurement is carried out in the direction of the extrusion.

**Claims**

1. A polymer blend (I) comprising:

   A) a first polyethylene component in a wt.% A amount from 5 to 95 wt.%, preferably from 10 to 90 wt.%, more preferably from 15 to 85 wt.%, said first polyethylene component having a density D$^A$ from 0.926 to 0.945 g/cm$^3$, preferably from 0.928 to 0.945 g/cm$^3$, a Melt Index MIE from 0.1 to 3 g/10 min and Mw/Mn of 7 or greater, preferably of 8 or greater; and
   B) a second polyethylene component in a wt.% B amount from 5 to 95 wt.%, preferably from 10 to 90 wt.%, more preferably from 15 to 85 wt.%, said second polyethylene component having a density D$^B$ from 0.949 to 0.965 g/cm$^3$, preferably from 0.952 to 0.965 g/cm$^3$, more preferably from 0.949 to 0.958 g/cm$^3$ or from 0.952 to 0.958 g/cm$^3$, and a Melt Index MIF from 5 to 28 g/10 min., preferably from 5 to 24 g/10 min.;

   wherein the wt.% A of the first polyethylene component A) and the wt.% B of second polyethylene component B) are with respect to the overall weight of A) + B); MIE is the Melt Index measured with 2.16 kg at 190°C, MIF is the Melt Index measured with 21.6 kg at 190°C, both according to to ISO 1133-1 2012-03.

2. The polymer blend (I) of claim 1, further comprising a polyethylene component C) comprising one or more ethylene polymers having a density of lower than 0.926 g/cm$^3$, in particular equal to or lower than 0.925 g/cm$^3$, more preferably equal to or lower than 0.924 g/cm$^3$, the preferred lower limit being of 0.910 g/cm$^3$ in all cases.

3. The polymer blend (I) of claim 2, wherein the amount of component C) is from 2 to 30 wt.%, preferably from 5 to 25 wt.%, referred to the total weight of A) + B) + C).

4. The polymer blend (I) according to Claim 1 or 2, wherein said second polyethylene component B) has a Mw/Mn equal to or higher than 6.0, in particular equal to or higher than 7.0.

5. The polymer blend (I) according to Claim 1 or 2, wherein said first and/or second polyethylene components A) and B) have a z-average molecular weight Mz equal to or lower than 800000 g/mol, measured with gel permeation chromatography (GPC).

6. The polymer blend (I) according to Claim 1 or 2, wherein said second polyethylene component B) has tensile modulus on compression molded plaque of at least 500 MPa, in particular at least 600 MPa, more in particular, at least 800 MPa.

7. The polymer blend (I) according to Claim 1 or 2, wherein said second polyethylene component B) has MIE from 0.1 to 3 g/min., preferably from 0.1 to 2 g/10min., in particular from 0.1 to 1.8 g/10min., or from 0.1 to 1.3 g/10min., or from 0.5 to 3 g/10min., or from 0.5 to 2 g/10min., or from 0.5 to 1.8 g/10min., or from 0.5 to 1.3 g/10min.

8. The polymer blend (I) according to Claim 1 or 2, wherein said second polyethylene component B) has MIF/MIP from 5 to 14, preferably from 5 to 12, wherein MIP is the Melt Index measured with 5 kg at 190°C according to to ISO 1133-1 2012-03.

9. A mono-axially oriented polymer film consisting of or comprising a polymer blend (I) according to any one of Claims 1 to 8.

10. The mono-axially oriented polymer film according to Claim 9, having a thickness equal to or smaller than 250 μm.

11. The mono-axially oriented polymer film according to Claim 9 or 10, which is a machine direction oriented (MDO) film.

12. The mono-axially oriented polymer film according to any of Claims 9 to 11, stretched with a stretch ratio from 3:1 to 9:1, preferably in machine direction (MD).

13. Method of production of the mono-axially oriented polymer film according to any of Claims 9 to 12, comprising a stretching step, during which a primary film comprising the polymer blend (I) according to any one of Claims 1 to 8 is stretched in one direction, preferably in machine direction (MD).

14. The method according to Claim 13, wherein the primary film has a thickness of at least 0.3 mm.

EUROPEAN SEARCH REPORT

**Application Number**

EP 24 16 3076

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 108 436 A1 (BOREALIS AG [AT]) 28 December 2022 (2022-12-28) * the whole document * | 1-14 | INV. C08L23/04 |
| A | US 10 370 527 B2 (DOW GLOBAL TECHNOLOGIES LLC [US]) 6 August 2019 (2019-08-06) * the whole document * | 1-14 | |
| A | US 2016/177073 A1 (DEMIRORS MEHMET [US] ET AL) 23 June 2016 (2016-06-23) * the whole document * | 1-14 | |

TECHNICAL FIELDS SEARCHED (IPC)

C08L

The present search report has been drawn up for all claims

| Place of search | Date of completion of the search | Examiner |
|---|---|---|
| Munich | 10 July 2024 | Rouault, Yannick |

EPO FORM 1503 03.82 (P04C01)

## ANNEX TO THE EUROPEAN SEARCH REPORT
## ON EUROPEAN PATENT APPLICATION NO.

EP 24 16 3076

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2024

| Patent document cited in search report | | Publication date | Patent family member(s) | | Publication date |
|---|---|---|---|---|---|
| EP 4108436 | A1 | 28-12-2022 | CN | 117642281 A | 01-03-2024 |
| | | | EP | 4108436 A1 | 28-12-2022 |
| | | | WO | 2022268966 A1 | 29-12-2022 |
| US 10370527 | B2 | 06-08-2019 | AR | 103008 A1 | 12-04-2017 |
| | | | BR | 112017012410 A2 | 20-02-2018 |
| | | | CA | 2969901 A1 | 16-06-2016 |
| | | | CL | 2017001470 A1 | 05-01-2018 |
| | | | EP | 3230364 A1 | 18-10-2017 |
| | | | US | 2017342244 A1 | 30-11-2017 |
| | | | WO | 2016093987 A1 | 16-06-2016 |
| US 2016177073 | A1 | 23-06-2016 | AR | 103018 A1 | 12-04-2017 |
| | | | BR | 112017011961 A2 | 26-12-2017 |
| | | | CN | 107001731 A | 01-08-2017 |
| | | | EP | 3234005 A1 | 25-10-2017 |
| | | | ES | 2932985 T3 | 30-01-2023 |
| | | | JP | 6998766 B2 | 18-01-2022 |
| | | | JP | 2018500412 A | 11-01-2018 |
| | | | US | 2016177073 A1 | 23-06-2016 |
| | | | WO | 2016099657 A1 | 23-06-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9722470 A
- WO 9821276 A
- CN 113969007 A
- US 3691145 A
- US 20100076160 A

**Non-patent literature cited in the description**

- **BENOIT H.** ; **REMPP P.** ; **GRUBISIC Z**. *J. Polymer Sci., Phys. Ed.*, 1967, vol. 5, 753